# EUROPÄISCHE PATENTSCHRIFT

(11) **EP 2 159 537 B1**
(45) Veröffentlichungstag und Bekanntmachung des Hinweises auf die Patenterteilung: **19.07.2017**
(21) Anmeldenummer: 09007743.9
(22) Anmeldetag: 12.06.2009
(51) Int. Cl.: G01B 11/24, B23Q 17/00, G01B 11/03, B23Q 17/09, B23Q 17/24

(54) **Werkzeugeinstell- und Messgerät**
Tool adjustment and measuring apparatus
Appareil de réglage d'outil et de mesure

(30) Priorität: 30.08.2008 DE 202008011614 U
(43) Veröffentlichungstag der Anmeldung: 03.03.2010
(73) Patentinhaber: E. Zoller GmbH & Co. KG Einstell- und Messgeräte, 74385 Pleidelsheim (DE)
(72) Erfinder: Pfau, Christian, 71691 Freiberg/Neckar (DE)
(74) Vertreter: Daub, Thomas

(56) Entgegenhaltungen:
- DE-A1- 10 153 581
- DE-A1- 10 212 004
- DE-A1- 10 237 426
- DE-A1- 19 840 801
- DE-U1-202005 014 998

## Beschreibung

### Stand der Technik

Die Erfindung betrifft ein System und Verfahren mit einem Werkzeugeinstell- und Messgerät.

Aus der DE 10 2006 011 796 A1 ist ein gattungsbildendes Werkzeugeinstell- und Messgerät zum Vermessen einer Werkzeugeinheit mit einer Kameravorrichtung bekannt, die dazu vorgesehen ist, von der Werkzeugeinheit Informationen aufzunehmen, und mit einer Recheneinheit, die dazu vorgesehen ist, zumindest mittels der Informationen einen Datensatz von zumindest einem Teil der Werkzeugeinheit zu generieren. Weiterhin ist aus DE 198 40 801 A1 und DE 102 12 004 A1 bekannt, bei einem Werkzeugeinstell- und Messgerät zum Vermessen einer Werkzeugeinheit mittels einer Kamera einen Datensatz von einem Teil der Werkzeugeinheit zu generieren und die Daten für eine maschinelle Weiterverarbeitung bereitzustellen.

Der Erfindung liegt insbesondere die Aufgabe zugrunde, ein Werkzeugeinstell- und Messgerät bereitzustellen, das besonders vorteilhaft in ein System eingebunden werden kann.

Die Erfindung stellt ein System und ein Verfahren gemäß der unabhängigen Ansprüche 1 bzw. 13 bereit. Ausgestaltungen des Systems ergeben sich aus den abhängigen Ansprüchen 2-12.

### Vorteile der Erfindung

Die Erfindung geht aus von einem Werkzeugeinstell- und Messgerät zum Vermessen einer Werkzeugeinheit mit zumindest einer Kameravorrichtung, die dazu ausgelegt ist, von der Werkzeugeinheit Informationen aufzunehmen, und mit einer Recheneinheit, die dazu ausgelegt ist, zumindest mittels der Informationen einen Datensatz von zumindest einem Teil der Werkzeugeinheit zu generieren. Dabei wird unter anderem vorgeschlagen, dass eine digitale Weiterverarbeitungseinheit dazu ausgelegt ist, den Datensatz in digitaler Form für eine maschinelle Weiterverarbeitung bereitzustellen. Unter einem "Einstell- und Messgerät" soll insbesondere ein Gerät verstanden werden, das dazu ausgelegt ist, wenigstens ein Werkzeug einer Werkzeugeinheit zumindest im einstelligen µm-Bereich genau zu vermessen. Unter einer "Werkzeugeinheit" soll insbesondere ein Werkzeug, z.B. ein Zerspanungswerkzeug, und/oder ein Werkzeugfutter verstanden werden. Unter "Informationen" sollen in diesem Zusammenhang insbesondere durch einen CCD-Sensor der Kameraeinheit aufgenommene Bildinformationen verstanden werden. Unter einer "digitalen Form für eine maschinelle Weiterverarbeitung" soll insbesondere eine Form verstanden werden, die von einer rein visuellen Form eines Bildschirms abweicht und insbesondere zu einer Übertragung und/oder Speicherung in und/oder durch einen Computer geeignet ist. Unter einer "digitalen Form" ist ferner insbesondere ein offenes Format, dessen Spezifikation veröffentlicht ist, gemeint. Unter einer "Recheneinheit" soll insbesondere ein Prozessor, eine Speichereinheit, eine Schnittstelle mit der Kameravorrichtung und/oder ein in der Speichereinheit gespeichertes Betriebs-, Steuer- und Berechnungsprogramm verstanden werden. Unter einer "digitalen Weiterverarbeitungseinheit" soll insbesondere ein Prozessor, eine Speichereinheit, Schnittstellen, ein in der Speichereinheit gespeichertes Betriebsprogramm und/oder ein in der Speichereinheit gespeichertes Kommunikationsprogramm verstanden werden.

Durch eine entsprechende Aufgabenstellung kann ein Werkzeugeinstell- und Messgerät besonders vorteilhaft in ein System eingebunden werden, indem Datensätze von dem Werkzeugeinstell- und Messgerät besonders einfach, schnell und komfortabel durch andere Geräte im System genutzt werden können.

Weiter wird vorgeschlagen, dass die Recheneinheit dazu ausgelegt ist, zumindest mittels der Informationen einen Datensatz einer Groberfassung zumindest eines Teils der Werkzeugeinheit zu generieren. Unter einer "Groberfassung" soll insbesondere eine Messgenauigkeit gröber als ±10 µm verstanden werden. Dadurch können eine besonders schnelle Datenerfassung und kleine, leicht bearbeitbare Datensätze erreicht werden.

In einer weiteren Ausgestaltung wird vorgeschlagen, dass die Recheneinheit dazu vorgesehen ist, wenigstens einen Datensatz von einem Werkzeug und wenigstens einem weiteren Element der Werkzeugeinheit zu generieren. Dabei können die Informationen des Werkzeugs und zumindest eines weiteren Elements in einem Datensatz oder auch in mehreren getrennten Datensätzen aufgenommen sein. Unter einem "weiteren Element" soll insbesondere eine Werkzeughalterung, wie etwa ein Werkzeugfutter, verstanden werden. Durch eine entsprechende Ausgestaltung können Informationen wenigstens eines weiteren Elements neben dem Werkzeug für Auswertungen vorteilhaft berücksichtigt werden, wie besonders vorteilhaft für eine Kollisionsüberprüfung. Ferner wird vorgeschlagen, dass die Weiterverarbeitungseinheit dazu vorgesehen ist, den Datensatz in zumindest zwei verschiedenen digitalen Datenformaten bereitzustellen. Unter "verschiedenen digitalen Datenformaten" sollen insbesondere grundlegend verschiedene Datenformate verstanden werden, die in verschiedenen Spezifikationen veröffentlicht sind und sich über verschiedene Versionen hinausgehende Unterschiede unterscheiden.

Unterschiedliche Versionen eines digitalen Datenformats sind in diesem Fall als ein einziges Datenformat zu verstehen. Dadurch kann ein besonders einfacher Datentransfer zu unterschiedlichen dritten Vorrichtungen, insbesondere verschiedener Hersteller, erreicht werden.

Weiter wird vorgeschlagen, dass die Weiterverarbeitungseinheit zumindest eine Schnittstelle aufweist, die dazu vorgesehen ist, den Datensatz auf ein Speichermedium zu schreiben. Unter einem "Speichermedium" sollen insbesondere in der Datenverarbeitung eingesetzte Datenträger, wie z.B. Flashspeicher, USB-Speicher, Disketten oder Festplatten, verstanden werden. Dadurch kann eine dauerhafte Sicherung und ein sicherer und störungsunanfälliger Datentransport erreicht werden.

In einer Weiterbildung der Erfindung wird vorgeschlagen, dass die Weiterverarbeitungseinheit zumindest eine Schnittstelle aufweist, die dazu vorgesehen ist, den Datensatz mittels einer Datenverbindung zu übertragen. Unter einer "Datenverbindung" soll insbesondere eine drahtgebundene und/oder eine drahtlose Datenverbindung, wie insbesondere eine funkgebundene Datenverbindung, verstanden werden. Über die Datenverbindung können Datensätze zu einer dritten Vorrichtung mittels eines Protokolls übertragen werden. Dadurch kann eine schnelle Übermittlung des Datensatzes erreicht werden. Ein mechanischer bzw. manueller Transport eines Datenträgers kann vermieden werden.

Ferner wird vorgeschlagen, dass die Recheneinheit dazu ausgelegt ist, einen Datensatz für einen Konturverlauf zu bestimmen. Unter einem "Konturverlauf" soll insbesondere eine maximale Ausdehnung einer beliebigen Querschnittsfläche entlang einer Rotationsachse der Werkzeugeinheit verstanden werden. Der Konturverlauf ist dazu geeignet, Kollisionen mit einem Werkstück in einem Bearbeitungsprozess im Vorhinein berechnen zu können. Dadurch kann ein Datensatz generiert werden, der besonders wenig Speicherplatz in Anspruch nimmt. Der Datensatz kann besonders leicht weiterverarbeitet werden. Weiter wird vorgeschlagen, dass die Recheneinheit dazu vorgesehen ist, eine Datenerfassung von bestimmbaren Teilbereichen der Werkzeugeinheit zu verarbeiten. Unter "bestimmbaren Teilbereichen" sollen insbesondere von der Recheneinheit und/oder vorzugsweise von einem Bediener manuell auswählbare Teilbereiche verstanden werden, wodurch insbesondere auch Teilbereiche der Werkzeugeinheit, wie insbesondere Konturbereiche, gezielt von einer Erfassung ausgenommen bzw. übersprungen werden können. Der Teilbereich ist vorzugsweise zumindest in einem Bereich der Werkzeugeinheit frei wählbar. Dadurch kann eine besonders schnelle Datenerfassung der relevanten Teilbereiche erreicht werden.

In einer vorteilhaften Ausbildung der Erfindung wird vorgeschlagen, dass das Werkzeugeinstell- und Messgerät eine Eingabeeinheit umfasst, die ein Eingabemittel aufweist, das dazu vorgesehen ist, einen Bereich der Werkzeugeinheit zu bestimmen, von dem der Datensatz zu generieren ist. Dadurch kann ein Bediener komfortabel einen zu erfassenden Bereich und/oder einen von einer Erfassung ausgeschlossenen Bereich bestimmen.

Ferner wird vorgeschlagen, dass das Werkzeugeinstell- und Messgerät eine Eingabeeinheit umfasst, die ein Eingabemittel aufweist, das dazu vorgesehen ist, eine Weitergabe eines Datensatzes an ein drittes Gerät auszulösen. Dadurch kann eine technisch einfache und sichere Ausgestaltung erreicht werden.

Des Weiteren wird vorgeschlagen, dass das Werkzeugeinstell- und Messgerät eine Signalisierungsvorrichtung umfasst, die dazu vorgesehen ist, dem Bediener eine Sollposition der Kameravorrichtung in Bezug auf die Werkzeugeinheit anzuzeigen. Dadurch sind eine einfache manuelle Positionierung und eine einfache Überwachung der Recheneinheit möglich.

In einer besonders vorteilhaften Ausgestaltung wird vorgeschlagen, dass das Werkzeugeinstell- und Messgerät eine Eingabeeinheit umfasst, die ein Eingabemittel aufweist, das dazu vorgesehen ist, eine Generierung eines Datensatzes aus zumindest einer Informationsaufnahme der Kameravorrichtung nach zumindest einer manuellen Positionierung auszulösen. Unter einer "manuellen Positionierung" soll insbesondere ein manuelles Anfahren einer Position durch einen Bediener verstanden werden. Die Positionierung kann händisch und/oder durch Benutzen der Eingabeeinheit erfolgen. Unter einer "Informationsaufnahme" soll insbesondere eine Aufnahme von Bildinformationen des CCD-Sensors der Kameravorrichtung verstanden werden. Dadurch ist es besonders komfortabel möglich, mittels einer manuellen Auswahl eines Aufnahmebereichs der Kameravorrichtung einen Bereich, aus dem ein Datensatz generiert werden soll, zu bestimmen.

Weiter wird vorgeschlagen, dass die Recheneinheit dazu vorgesehen ist, aus zumindest jeweils einer Informationsaufnahme der Kameravorrichtung von zumindest zwei manuellen Positionierungen einen Datensatz zu generieren. Dadurch ist es möglich, aus mehreren Bereichen einen Datensatz zu generieren.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

### Beschreibung des Ausführungsbeispiels

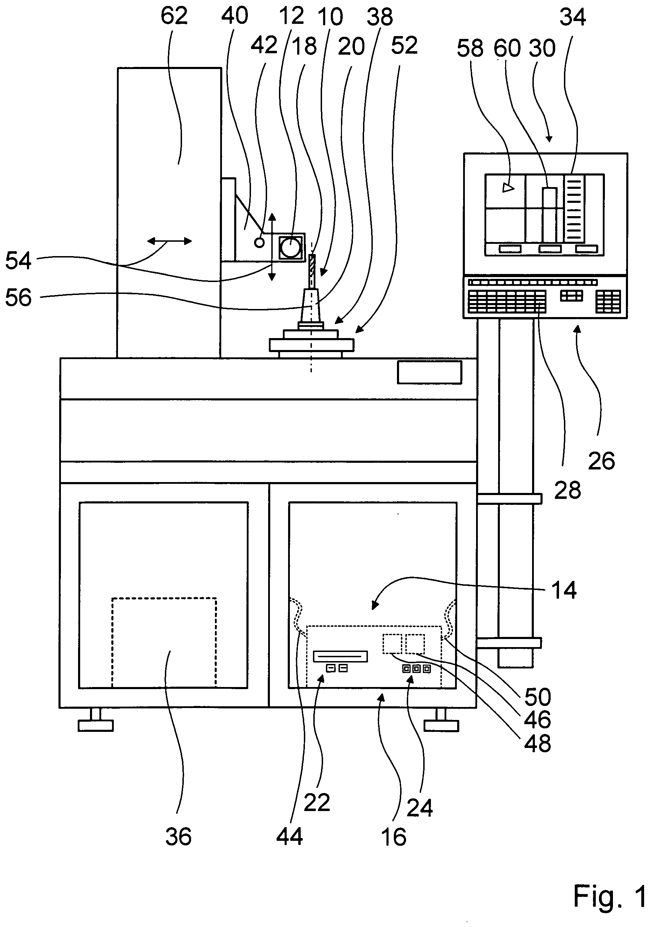

Figur 1 zeigt ein Werkzeugeinstell- und Messgerät zum Vermessen einer Werkzeugeinheit 10. Das Werkzeugeinstell- und Messgerät weist eine Kameravorrichtung 12 auf, die dazu ausgelegt ist, von der Werkzeugeinheit 10 Informationen aufzunehmen. Zudem weist das Werkzeugeinstell- und Messgerät eine Recheneinheit 14 auf, die einen Prozessor 46, eine Speichereinheit 48, eine Schnittstelle 44 mit der Kameravorrichtung 12 und ein in der Speichereinheit 48 gespeichertes Berechnungs- und Betriebsprogramm umfasst. Die Recheneinheit.14 ist dazu ausgelegt, zumindest mittels der Informationen einen Datensatz von zumindest einem Teil der Werkzeugeinheit 10 zu generieren.

Ferner weist das Werkzeugeinstell- und Messgerät eine digitale Weiterverarbeitungseinheit 16 auf, die dazu ausgelegt ist, den Datensatz in digitaler Form für eine maschinelle Weiterverarbeitung bereitzustellen. Die Weiterverarbeitungseinheit 16 weist den Prozessor 46 und die Speichereinheit 48 auf, die einstückig mit dem Prozessor 46 und der Speichereinheit 48 der Recheneinheit 14 ausgeführt sind. Die Weiterverarbeitungseinheit 16 ist dazu ausgelegt den von der Recheneinheit 14 generierten Datensatz für eine Weiterverarbeitung aufzubereiten und Schnittstellen 22, 24 für eine Weitergabe an ein drittes Gerät bereitzustellen. Dazu umfasst die Weiterverarbeitungseinheit 16 ein spezielles Softwaremodul. Das Softwaremodul ist in der Speichereinheit 48 gespeichert und ist dazu vorgesehen, zusammen mit dem Berechnungs- und Betriebsprogramm der Recheneinheit 14 auf dem Prozessor 46 ausgeführt zu werden. Des Weiteren weist die Weiterverarbeitungseinheit 16 eine Schnittstelle 50 auf, die dazu vorgesehen ist, mit einem Monitor 34 verbunden zu werden.

Die Weiterverarbeitungseinheit 16 ist dazu vorgesehen, den Datensatz in verschiedenen digitalen Datenformaten bereitzustellen. Die Weiterverarbeitungseinheit 16 kann einen Datensatz zum Beispiel in den Datenformaten VDA-FS, IFC, IGES, STEP (ISO-Standard 10303) und DXF bereitstellen. Des Weiteren ist es möglich, einen Konturverlauf 60 der Werkzeugeinheit 10, Informationen der Werkzeugeinheit 10 oder eines Modells der Werkzeugeinheit 10 als Bilddatei, zum Beispiel in den Datenformaten JPEG, Windows Bitmap oder Graphics Interchange Format, bereitzustellen.

Die Schnittstellen 22 der Weiterverarbeitungseinheit 16 sind dazu vorgesehen, den Datensatz auf Speichermedien zu schreiben. Eine der Schnittstellen 22 ist dazu ausgebildet, den Datensatz mittels einer USB-Schnittstelle auf USB-Speichermedien zu schreiben. Eine zweite Schnittstelle 22 ist dazu vorgesehen, den Datensatz mittels einer Aufnahmevorrichtung auf Flash-Speicherkarten, genauer SD-Speicherkarten, zu schreiben. Eine dritte Schnittstelle 22 ist dazu ausgebildet, den Datensatz auf optische Datenspeicher, und zwar auf CDs und DVDs, zu speichern.

Des Weiteren weist die Weiterverarbeitungseinheit 16 die Schnittstellen 24 auf, die den Datensatz mittels einer Datenverbindung an verschiedene dritte, nicht dargestellte Geräte verschiedener Hersteller übermitteln können. Diese Schnittstellen 24 können den Datensatz über draht- und funkgestützte Datenverbindungen, wie über IEEE 802.3 (Ethernet), IEEE 802.15.1 (Bluetooth), IEEE-802.11 (Wireless LAN), USB oder IEEE 1394 (FireWire), übertragen. Die Datenverbindungen übertragen die Datensätze mittels Protokollen, deren Spezifikationen veröffentlicht sind. Des Weiteren stehen die Schnittstellen 24 für eine Visualisierung, etwa auf dem Monitor 34 und einem Drucker 36, zur Verfügung.

Die Recheneinheit 14 ist dazu vorgesehen, mittels der von der Kameravorrichtung 12 aufgenommenen Informationen einen Datensatz einer Groberfassung eines Teils oder auch mehrerer Teile der Werkzeugeinheit 10 zu generieren. Die Groberfassung zeichnet sich dadurch aus, dass diese einen geringeren Zeitaufwand erfordert als eine Feinerfassung für einen entsprechenden Teil der Werkzeugeinheit 10. Der von der Recheneinheit 14 aus der Groberfassung bestimmte Datensatz beschreibt den Konturverlauf 60 der Werkzeugeinheit 10. Mittels des Datensatzes des Konturverlaufs 60 berechnet ein (nicht in der Zeichnung dargestelltes) Gerät, ob bei einer vorgesehenen Bearbeitung eines Werkstücks eine Kollision zwischen der Werkzeugeinheit 10 und dem Werkstück stattfindet.

Des Weiteren ist die Recheneinheit 14 dazu vorgesehen, einen Datensatz von einem Werkzeug 18 und wenigstens einem weiteren Element 20 der Werkzeugeinheit 10, und zwar eines Werkzeugfutters 20, zu generieren. Mittels des generierten Datensatzes kann auch eine Kollision zwischen dem Werkstück und dem Werkzeugfutter 20 berechnet werden.

Die Recheneinheit 14 ist dazu vorgesehen, eine Datenerfassung von bestimmbaren Teilbereichen der Werkzeugeinheit 10 zu verarbeiten. Ferner ist die Recheneinheit 14 dazu vorgesehen, aus mehreren Informationsaufnahmen der Kameravorrichtung 12, nach einer manuellen Positionierung, einen einzigen Datensatz zu generieren. Der Bediener kann so mittels manueller Positionierungen die Teilbereiche bestimmen, aus denen die Recheneinheit 14 einen Datensatz generieren soll.

Die Werkzeugeinstell- und Messvorrichtung weist eine Eingabeeinheit 26 auf. Die Eingabeeinheit 26 ist als Tastatur ausgebildet. Alternativ kann die Eingabeeinheit 26 auch als Touchscreen ausgebildet sein. Die Eingabeeinheit 26 umfasst Eingabemittel 28, die unter anderem dazu vorgesehen sind, dass ein Bediener mittels der Eingabemittel 28 einen Bereich bestimmen kann, aus dem die Recheneinheit 14 einen Datensatz generieren soll. Mittels der Eingabemittel 28 kann ein Bediener eine Weitergabe des Datensatzes an ein drittes Gerät auslösen. Die Weitergabe erfolgt über eine der Schnittstellen 22, 24.

Als ein Hilfsmittel zu einer manuellen Positionierung weist die Werkzeugeinstell- und Messvorrichtung eine Signalisierungsvorrichtung 30 auf. Die Signalisierungsvorrichtung 30 zeigt einem Bediener eine Sollposition der Kameravorrichtung 12 im Bezug auf die Werkzeugeinheit 10 an, sofern die Sollposition von der Recheneinheit 14 berechnet ist. Zudem wird mittels einer auf einem Monitor 34 dargestellten Kompassnadel 58 der Signalisierungsvorrichtung 30 eine Richtung angegeben, in die der Bediener die Kameravorrichtung 12 oder die Werkzeugeinheit 10 manuell bewegen soll, um die Sollposition zu erreichen.

Das Werkzeugfutter 20 ist in einem mit einer Spindel 38 verbundenen Vorsatzhalter 52 eingespannt. Die Spindel 38 ist um eine Rotationsachse 56 drehbar gelagert. Die Spindel 38 kann sowohl manuell von einem Bediener als auch von einem nicht näher dargestellten Aktuator angetrieben werden, wobei der Aktuator manuell vom Bediener ansteuerbar und auch von einer Steuereinheit automatisiert ansteuerbar ist. Zur Erfassung einer Drehbewegung verfügt das Werkzeugeinstell- und Messgerät über ein nicht näher dargestelltes Rotationsmesssystem. Das Rotationsmesssystem dient zur Bestimmung einer Lage um die Rotationsachse 56.

Zur Datenerfassung verfügt das Werkzeugeinstell- und Messgerät über die Kameravorrichtung 12. Die Kameravorrichtung 12 ist als ein Durchlichtsystem ausgebildet. Dabei liegen eine Kamera und ein nicht näher dargestelltes Beleuchtungsmittel auf gegenüberliegenden Seiten der Werkzeugeinheit 10. Es ist denkbar, eine zweite nicht dargestellte Kameravorrichtung zu implementieren, die als ein Auflichtsystem ausgebildet ist. Dabei sind die Kamera und ein Beleuchtungsmittel auf einer gleichen Seite der Werkzeugeinheit 10 positioniert. Die Kameravorrichtung 12 ist auf einem Schlitten 40 montiert und ist entlang zweier Achsen verfahrbar. Eine nicht näher dargestellte Längenmessvorrichtung ist dazu vorgesehen, eine Kameraposition der Kameravorrichtung 12 bzw. des Schlittens 40 in zwei verfahrbare Raumrichtungen 54 zu bestimmen.

Zur Generierung des Datensatzes wählt ein Bediener mittels der Eingabeeinheit 26 in einem Menü ein Messprogramm aus. Er kann zwischen einer automatischen und einer manuellen Positionierung und zwischen einer Fein- und einer Groberfassung auswählen. Die automatische Positionierung kann der Bediener nur wählen, wenn die Werkzeugeinstell- und Messvorrichtung mit Aktuatoren für eine automatische Positionierung ausgestattet ist. Bei einer automatischen Positionierung muss ein Bediener einen Start- und einen Zielpunkt und/oder einen Messpunkt in das Menü eintragen. Alternativ und/oder zusätzlich kann der Start- und Zielpunkt und/oder der Messpunkt aus einem gespeicherten Datensatz übernommen werden. Bei der Feinerfassung werden neben dem Konturverlauf auch Werkzeugschneiden vermessen. Die Datenerfassung erfolgt dann im Rahmen der Feinerfassung mit einer Genauigkeit im einstelligen µm-Bereich.

Nach einem Starten durch den Bediener erfolgt die Datenerfassung. Dabei steuert entweder der Bediener oder ein Steuerprogramm der Recheneinheit 14 die Bewegung der Kameravorrichtung 12 und die Bewegung der Werkzeugeinheit 10.

Steuert das Steuerprogramm der Recheneinheit 14 die Bewegung der Kameravorrichtung 12 und/oder die Bewegung der Werkzeugeinheit 10, erfolgt die Datenerfassung bei der Groberfassung fließend und bei der Feinerfassung schrittweise. Bei der schrittweisen Datenerfassung werden Bewegungen der Kameravorrichtung 12 und der Werkzeugeinheit 10 zur Informationsaufnahme gestoppt bzw. werden bei ruhender Kameravorrichtung 12 und ruhender Werkzeugeinheit 10 die Informationen mittels der Kameravorrichtung 12 aufgenommen. Bei der fließenden Datenerfassung werden Informationen mittels der Kameravorrichtung 12 während einer Bewegung der Kameravorrichtung 12 und/oder einer Bewegung der Werkzeugeinheit 10 erfasst.

Steuert der Bediener die Datenerfassung, kann die Positionierung einerseits händisch, mittels einer Freischalteinrichtung 42, erfolgen. Dabei löst ein Bediener eine nicht näher dargestellte mechanische Verriegelung und kann die Kameravorrichtung 12 mittels des Schlittens 40 entlang einer Vertikalachse 62 in vertikaler Richtung und gemeinsam mit der Vertikalachse 62 in horizontaler Richtung entlang der Raumrichtungen händisch verschieben. Andererseits kann die manuelle Positionierung mittels der Aktuatoren und der Eingabeeinheit 26 erfolgen, indem die Aktuatoren angesteuert werden. Bei Erreichen der gewünschten Position bestätigt der Bediener mittels der Eingabeeinheit 26 die Informationsaufnahme der Kameravorrichtung 12. Dieser Vorgang wird so oft wiederholt bis alle gewünschten Bereiche der Werkzeugeinheit 10 aufgenommen sind.

**Bezugszeichen**

| | | | |
|---|---|---|---|
| 10 | Werkzeugeinheit | 44 | Schnittstelle |
| 12 | Kameravorrichtung | 46 | Prozessor |
| 14 | Recheneinheit | 48 | Speichereinheit |
| 16 | Weiterverarbeitungseinheit | 50 | Schnittstelle |
| 18 | Werkzeug | 52 | Vorsatzhalter |
| 20 | Element | 54 | Raumrichtung |
| 22 | Schnittstelle | 56 | Rotationsachse |
| 24 | Schnittstelle | 58 | Kompassnadel |
| 26 | Eingabeeinheit | 60 | Konturverlauf |
| 28 | Eingabemittel | 62 | Vertikalachse |
| 30 | Signalisierungsvorrichtung | | |
| 34 | Monitor | | |
| 36 | Drucker | | |
| 38 | Spindel | | |
| 40 | Schlitten | | |
| 42 | Freischalteinrichtung | | |

## Patentansprüche

1. System mit einem Werkzeugeinstell- und Messgerät zum Vermessen einer Werkzeugeinheit (10), mit zumindest einer Kameravorrichtung (12), die dazu ausgelegt ist, von der Werkzeugeinheit (10) Informationen aufzunehmen, mit einer Recheneinheit (14), die dazu ausgelegt ist, zumindest mittels der Informationen einen Datensatz von zumindest einem Teil der Werkzeugeinheit (10) zu generieren,
und mit einer digitalen Weiterverarbeitungseinheit (16), die dazu ausgelegt ist, den Datensatz in digitaler Form für eine maschinelle Weiterverarbeitung bereitzustellen, wobei die Recheneinheit (14) dazu ausgelegt ist, zumindest mittels der von der Kameravorrichtung (12) aufgenommenen Informationen einen Datensatz einer Groberfassung zumindest eines Teils der Werkzeugeinheit (10) zu generieren,
wobei der von der Recheneinheit aus der Groberfassung bestimmte Datensatz einen Konturverlauf (60) der Werkzeugeinheit (10) beschreibt, der dazu geeignet ist, Kollisionen mit einem Werkstück in einem Bearbeitungsprozess im Vorhinein berechnen zu können, und mit einem Gerät, das dazu ausgelegt ist, mittels des Datensatzes des Konturverlaufs (60) zu berechnen, ob bei einer vorgesehenen Bearbeitung eines Werkstücks eine Kollision zwischen der Werkzeugeinheit (10) und dem Werkstück stattfindet.

2. System nach einem der vorhergehenden Ansprüche, wobei die Recheneinheit (14) dazu vorgesehen ist, wenigstens einen Datensatz von einem Werkzeug (18) und wenigstens einem weiteren Element (20) der Werkzeugeinheit (10) zu generieren.

3. System nach einem der vorhergehenden Ansprüche, wobei die Weiterverarbeitungseinheit (16) dazu vorgesehen ist, den Datensatz in zumindest zwei verschiedenen digitalen Datenformaten bereitzustellen.

4. System nach einem der vorhergehenden Ansprüche, wobei die Weiterverarbeitungseinheit (16) zumindest eine Schnittstelle (22) aufweist, die dazu vorgesehen ist, den Datensatz auf ein Speichermedium zu schreiben.

5. System nach einem der vorhergehenden Ansprüche, wobei die Weiterverarbeitungseinheit (16) zumindest eine Schnittstelle (24) aufweist, die dazu vorgesehen ist, den Datensatz mittels einer Datenverbindung zu übertragen.

6. System nach einem der vorhergehenden Ansprüche, wobei die Recheneinheit (14) dazu vorgesehen ist, einen Datensatz für einen Konturverlauf (60) zu bestimmen.

7. System nach einem der vorhergehenden Ansprüche, wobei die Recheneinheit (14) dazu vorgesehen ist, eine Datenerfassung von bestimmbaren Teilbereichen der Werkzeugeinheit (10) zu verarbeiten.

8. System nach einem der vorhergehenden Ansprüche, wobei das Werkzeugeinstell- und Messgerät eine Eingabeeinheit (26) aufweist, die ein Eingabemittel (28) aufweist, das dazu vorgesehen ist, einen Bereich der Werkzeugeinheit (10) zu bestimmen, von dem der Datensatz zu generieren ist.

9. System nach einem der vorhergehenden Ansprüche, wobei das Werkzeugeinstell- und Messgerät eine Eingabeeinheit (26) aufweist, die ein Eingabemittel (28) aufweist, das dazu vorgesehen ist, eine Weitergabe eines Datensatzes an ein drittes Gerät auszulösen.

10. System nach einem der vorhergehenden Ansprüche, wobei das Werkzeugeinstell- und Messgerät eine Signalisierungsvorrichtung (30) aufweist, die dazu vorgesehen ist, dem Bediener eine Sollposition der Kameravorrichtung (12) in Bezug auf die Werkzeugeinheit (10) anzuzeigen.

11. System nach einem der vorhergehenden Ansprüche, wobei Werkzeugeinstell- und Messgerät eine Eingabeeinheit (26) aufweist, die ein Eingabemittel (28) aufweist, das dazu vorgesehen ist, eine Generierung eines Datensatzes aus zumindest einer Informationsaufnahme der Kameravorrichtung (12) nach zumindest einer manuellen Positionierung auszulösen.

12. System nach Anspruch 11, wobei die Recheneinheit (14) dazu vorgesehen ist, aus zumindest jeweils einer Informationsaufnahme der Kameravorrichtung (12) von zumindest zwei manuellen Positionierungen einen Datensatz zu generieren.

13. Verfahren mit einem Werkzeugeinstell- und Messgerät zum Vermessen einer Werkzeugeinheit (10) mit zumindest einer Kameravorrichtung (12), mittels deren von der Werkzeugeinheit (10) Informationen aufgenommen werden, und mit einer Recheneinheit (14), mittels deren zumindest mittels der Informationen ein Datensatz von zumindest einem Teil der Werkzeugeinheit (10) generiert wird, und mit einer digitalen Weiterverarbeitungseinheit (16), mittels deren der Datensatz in digitaler Form für eine maschinelle Weiterverarbeitung bereitgestellt wird, wobei mittels der Recheneinheit (14) zumindest mittels der von der Kameravorrichtung (12) aufgenommenen Informationen ein Datensatz einer Groberfassung zumindest eines Teils der Werkzeugeinheit (10) generiert wird, wobei der von der Recheneinheit aus der Groberfassung bestimmte Datensatz einen Konturverlauf (60) der Werkzeugeinheit beschreibt, der dazu geeignet ist, Kollisionen mit einem Werkstück in einem Bearbeitungsprozess im Vorhinein berechnen zu können, und mit einem Gerät, mittels dessen mittels des Datensatzes des Konturverlaufs (60) berechnet wird, ob bei einer vorgesehenen Bearbeitung eines Werkstücks eine Kollision zwischen der Werkzeugeinheit (10) und dem Werkstück stattfindet.

## Claims

1. System with a tool adjustment and measuring apparatus for measuring a tool unit (10), with at least one camera device (12) configured to receive information of the tool unit (10), with a computing unit (14) configured to generate a dataset of at least a portion of the tool unit (10) at least on the basis of the information,
and with a digital further-processing unit (16) configured to supply the dataset in digital form for a machine further-processing,
wherein the computing unit (14) is configured to generate a dataset of a rough capturing of at least a portion of the tool unit (10) at least on the basis of the information received by the camera device (12),
wherein the dataset determined by the computing unit from the rough capturing describes a contour outline (60) of the tool unit (10) which is suitable for in-advance calculating of collisions with a workpiece in a machining process, and with an apparatus configured to calculate, via the dataset of the contour outline (60), whether there is a collision between the tool unit (10) and the workpiece in an envisaged processing of the workpiece.

2. System according to one of the preceding claims,
wherein the computing unit (14) is configured to generate at least one dataset of a tool (18) and of at least one further element (20) of the tool unit (10).

3. System according to one of the preceding claims,
wherein the further-processing unit (16) is configured to supply the dataset in at least two different digital data formats.

4. System according to one of the preceding claims,
wherein the further-processing unit (16) comprises at least one interface (22) which is configured to write the dataset into a memory medium.

5. System according to one of the preceding claims,
wherein the further-processing unit (16) comprises at least one interface (24) which is configured to transfer the dataset via a data connection.

6. System according to one of the preceding claims,
wherein the computing unit (14) is configured to determine a dataset for a contour outline (60).

7. System according to one of the preceding claims,
wherein the computing unit (14) is configured to process captured data of determinable partial regions of the tool unit (10).

8. System according to one of the preceding claims,
wherein the tool adjustment and measuring apparatus comprises an input unit (26) featuring an input means (28) which is configured to determine a region of the tool unit (10) which the dataset is to be generated from.

9. System according to one of the preceding claims,
wherein the tool adjustment and measuring apparatus comprises an input unit (26) featuring an input means (28) which is configured to initiate a transfer of a dataset to a third apparatus.

10. System according to one of the preceding claims,
wherein the tool adjustment and measuring apparatus comprises a signalization device (30), which is configured to indicate to the operator a target position of the camera device (12) with respect to the tool unit (10).

11. System according to one of the preceding claims,
wherein the tool adjustment and measuring apparatus comprises an input unit (26) featuring an input means (28) which is configured to initiate a dataset to be generated from at least one piece of information received by the camera device (12) following at least one manual positioning.

12. System according to claim 11,
wherein the computing unit (14) is configured to generate a dataset from respectively at least one piece of information received by the camera device (12) of at least two manual positionings.

13. Method with a tool adjustment and measuring apparatus for measuring a tool unit (10), with at least one camera device (12) by which information is received of the tool unit (10), and with a computing unit (14), by which a dataset of at least a portion of the tool unit (10) is generated at least on the basis of the information, and with a digital further-processing unit (16), via which the dataset is supplied in digital form for machine further-processing,
wherein a dataset of a rough capturing of at least a portion of the tool unit (10) is generated by the computing unit (14) at least on the basis of the information received by the camera device (12),
wherein the dataset determined from the rough capturing by the computing unit (14) describes a contour outline (60) of the tool unit (10) which is suitable for allowing in-advance calculating of collisions with a workpiece in a machining process, and with an apparatus by means of which is calculated, via the dataset of the contour outline (60), whether there is a collision between the tool unit (10) and the workpiece in an envisaged processing of the workpiece.

## Revendications

1. Système avec un appareil de réglage et de mesure d'outil pour mesurer une unité outil (10), avec au moins un dispositif caméra (12) conçu pour recevoir des informations de l'unité outil (10), avec une unité arithmétique et logique (14) conçue pour générer un ensemble de données d'au moins une portion de l'unité outil (10) au moins par le biais des informations,
et avec une unité à traitement suivant digitale (16), laquelle est prévue à approvisionner l'ensemble de données en forme digitale pour un traitement suivant machinal, l'unité arithmétique et logique (14) étant conçue à générer un ensemble de données d'un captage approximatif d'au moins une portion de l'unité outil (10) au moins par le biais des informations reçues par le dispositif caméra (12), l'ensemble de données déterminé par l'unité arithmétique et logique à base du captage approximatif décrivant un tracé de contour (60) de l'unité outil (10), lequel est apte à calculer en avance des collisions avec une pièce d'oeuvre en un procédé de traitement, et avec un appareil conçu pour calculer, à base de l'ensemble de données du tracé de contour (60), si dans un traitement envisagé d'une piéce d'oeuvre il y a une collision entre l'unité outil (10) et la pièce d'oeuvre.

2. Système selon l'une quelconque des revendications précédentes,
l'unité arithmétique et logique (14) étant conçue pour générer au moins un ensemble de données d'un outil (18) et d'au moins un autre élément (20) de l'unité outil (10).

3. Système selon l'une quelconque des revendications précédentes,
l'unité à traitement suivant (16) étant prévue à approvisionner l'ensemble de données dans au moins deux formats de données digitaux différents.

4. Système selon l'une quelconque des revendications précédentes,
l'unité à traitement suivant (16) comportant au moins un interface (22) conçu pour écrire l'ensemble de données sur un média de stockage.

5. Système selon l'une quelconque des revendications précédentes,
l'unité à traitement suivant (16) comportant au moins un interface (24) conçu pour transférer l'ensemble de données via une connexion de données.

6. Système selon l'une quelconque des revendications précédentes,
l'unité arithmétique et logique (14) étant prévue à déterminer un ensemble de données pour un tracé de contour (60).

7. Système selon l'une quelconque des revendications précédentes,
l'unité arithmétique et logique (14) étant prévue à traiter des données captées des certaines régions partielles déterminables de l'unité outil (10).

8. Système selon l'une quelconque des revendications précédentes,
l'appareil de réglage et de mesure d'outil comprenant une unité d'entrée (26), laquelle comporte un moyen d'entrée (28) conçu pour identifier une région de l'unité outil (10), de laquelle l'ensemble de données doit être généré..

9. Système selon l'une quelconque des revendications précédentes,
l'appareil de réglage et de mesure d'outil comprenant une unité d'entrée (26), laquelle comporte un moyen d'entrée (28) conçu pour initier un transfert d'un ensemble de données à un troisième appareil.

10. Système selon l'une quelconque des revendications précédentes,
l'appareil de réglage et de mesure d'outil comprenant un dispositif à signalisation (30) conçu pour indiquer à l'opérateur une position prescrite du dispositif caméra (12) par rapport à l'unité outil (10).

11. Système selon l'une quelconque des revendications précédentes,
l'appareil de réglage et de mesure d'outil comprenant une unité d'entrée (26), laquelle comporte un moyen d'entrée (28) conçu pour initier qu'un ensemble de données soit généré d'au moins un réception d'information par le dispositif caméra (12) d'après au moins un positionnement manuel.

12. Système selon la revendication 11,
l'unité arithmétique et logique (14) étant prévue à générer un ensemble de données d'au moins une information respectivement reçue par le dispositif caméra (12) d'au moins deux positionnements manuels.

13. Procédé avec un appareil de réglage et de mesure d'outil pour mesurer une unité outil (10) avec au moins un dispositif caméra (12), par le biais duquel des informations peuvent être reçues de l'unité outil (10), et avec une unité arithmétique et logique (14), par le biais de laquelle un ensemble de données d'au moins une portion de l'unité outil (10) est généré au moins à base des informations, et avec une unité à traitement suivant digitale (16), par le biais de laquelle l'ensemble de données est approvisionné en forme digitale pour un traitement suivant machinal, au moins un ensemble de données d'un captage approximatif d'au moins une portion de l'unité outil (10) étant généré par l'unité arithmétique et logique (14) au moins par le biais des informations reçues par le dispositif caméra (12),
l'ensemble de données, déterminé par l'unité arithmétique et logique à base du captage approximatif, décrivant un tracé de contour (60) de l'unité outil, lequel est apte à calculer en avance des collisions avec une pièce d'oeuvre en un procédé de traitement,
et avec un appareil, par le biais duquel il est calculé, à base de l'ensemble de données du tracé de contour (60), si dans un traitement envisagé d'une pièce d'oeuvre il y a une collision entre l'unité outil (10) et la pièce d'oeuvre.
